# EUROPEAN PATENT SPECIFICATION

(11) **EP 3 646 954 B1**
(45) Date of publication and mention of the grant of the patent: **30.07.2025**
(21) Application number: 19206184.4
(22) Date of filing: 30.10.2019
(51) Int. Cl.: B05B 12/08, B05B 7/24, B05B 12/10, B05B 12/12

(54) **METHODS, APPARATUSES, AND SYSTEMS FOR SMART DELIVERY OF COATING MATERIAL**
VERFAHREN, VORRICHTUNGEN UND SYSTEME ZUR INTELLIGENTEN ABGABE VON BESCHICHTUNGSMATERIAL
PROCÉDÉS, APPAREILS ET SYSTÈMES DE DISTRIBUTION INTELLIGENTE DE MATÉRIAU DE REVÊTEMENT

(30) Priority: 02.11.2018 US 201816179066
(43) Date of publication of application: 06.05.2020
(73) Proprietor: The Boeing Company, Arlington, VA 22202 (US)
(72) Inventor: SHE, Chunxing, Chicago, IL 60606-1596 (US); GAYLE, David Michael, Chicago, IL 60606-1596 (US)
(74) Representative: Plasseraud IP

(56) References cited:
- DE-A1- 19 756 467
- US-A- 5 757 498
- US-A- 6 149 071
- US-A1- 2018 077 787
- US-A1- 2018 281 012
- US-B1- 6 528 109

## Description

### TECHNOLOGICAL FIELD

The present disclosure relates generally to the field of coating methods, systems and apparatuses. More specifically the present disclosure relates to the field of manually operated or automated systems and apparatuses for delivering coating materials to substrate surfaces.

### BACKGROUND

Many large structures comprise substrates having substrate surfaces that require painting, priming, or the application of a further coating. In some instances, such coatings are administered to substrate surfaces manually; for example, by human artisans. Often, such coatings must be delivered with particular attention paid to coating thicknesses and, where possible, substantial coating uniformity within certain tolerances. This is especially the case when particularly large structures comprise complex forms, curves, irregular surfaces, etc. DE 197 56 467, in accordance with its abstract, states that it relates to a method involving performing measurements on the still wet paint at optional points on the object, storing the measurement values and comparing them with desired values to predict the quality of the dried paint coating and to derive quality parameters from them. The film thickness, thickness distribution, quantity of solvent and solid components are measured contactlessly.
US 6 528 109, in accordance with its abstract, states that it relates to an integrated paint quality control system for feedback control of paint process for painting vehicle bodies includes a film thickness sensor system for measuring paint film thickness of the painted bodies. The system also includes a control system communicating with the film thickness sensor system for receiving information of the paint film thickness and combining the paint film thickness information with paint automation parameters on a vehicle identification number (VIN) basis of the painted bodies to control the paint process.
US 2018/281012, in accordance with its abstract, states that it relates to an automated painting system that includes a robotic arm and a painting end effector coupled at a distal end of the robotic arm, with the painting end effector configured to apply paint to a target surface. The painting system can also include a computing device executing a computational planner that: generates instructions for driving the painting end effector and robotic arm to perform at least one painting task that includes applying paint, via the painting the end effector, to a plurality of drywall pieces, the generating based at least in part on obtained target surface data; and drives the end effector and robotic arm to perform the at least one painting task.
US 6 149 071, in accordance with its abstract, states that it relates to a spray control system for applying a coating composition to an object. The control system includes an applicator, flow control valve, flow meter, and an electronic controller connected to the valve and flow meter. The controller regulates the flow of coating composition to maintain it at a user-specified setpoint. The controller includes a learn mode in which it learns the proper valve setting for a particular setpoint and stores a valve control signal that is later used at the start of a spray application to initially set the valve at the proper position. Then, once the flow of material begins, the controller uses either incremental or proportional control, or both, to maintain the flow at the specified setpoint. When learning a setpoint, the controller also stores the current values of a number of user-specified process parameters, such as ambient air temperature and the coating composition source pressure. These stored parameter values are then monitored during the spray application and an alarm notification is provided if they drift outside of a window about their stored values.
US 5 757 498, in accordance with its abstract, states that it relates to an optical spray coating monitoring system which uses a laser displacement sensor and a data acquisition system to monitor a spray gun operator's technique, and display information relating to coating conditions and/or technique. The system includes a laser displacement sensor having a sensor head that is removably attached to a hand held spray gun. The laser displacement sensor measures the distance from the spray nozzle to the surface being coated. The laser displacement sensor also preferably measures the angle of orientation of the spray gun with respect to the surface being coated. The sensor head can also include an infrared temperature sensor. Another embodiment of the invention also uses a second laser displacement sensor. The first sensor measures the distance from the spray gun nozzle to the surface being coated before the coating has been applied to the surface and the second sensor measures the distance after the coating has been applied to the surface, thus allowing determination of the thickness of the wet film on the surface being coated. The measured information is transmitted to the data acquisition system. The data acquisition system provides low level calculations, displays raw data or statistical information, and stores data in memory so that the data can be later downloaded to a computer for further analysis at a later time. US 2018/077787 A1, in accordance with its abstract, states that it relates to a method for coating a surface with a coating jet containing coating particles includes forming the coating jet from at least two partial jets. The method also includes forming one of the exit channels as a spray channel for a first gas stream containing the coating particles. The method also includes forming the other of the exit channels as a control channel. In case of a deviation of the ascertained spray angle (α) from the predetermined target spray angle, the method also includes increasing the volume flow of a first partial jet of the at least two partial jets, and decreasing the volume flow of a second partial jet of the at least two partial jets.

### SUMMARY

The claimed subject matter is presented in independent claims. Further subject matter is claimed in dependent claims.

Present aspects disclose a system for depositing a substantially uniform coating, with the apparatus including at least one detector. The detector is configured to detect at least one condition parameter and/or at least one substrate parameter. The system further includes a controller in communication with at least one memory, with the memory containing an expandable collection of at least one of: at least one condition parameter, and/or at least one substrate parameter. The system further includes a coating material applicator, with the coating material applicator in communication with the controller. The controller is configured to regulate a release of a coating material from the coating material applicator to a substrate, with the release of a coating material configured to occur in response to at least one condition parameter and/or at least one substrate parameter, with the substrate having a substrate surface.

According to another aspect, the condition parameter includes at least one of:
an ambient relative humidity; an ambient temperature; a coating material flow rate;
characteristics of the coating material (e.g., including the presence of proper component concentrations, for example, the characteristics of a coating material mixture that can be, for example, a coating material suspension); a detected distance; a detected angle, a detected location, a deposited coating thickness, etc. and combinations thereof.

In a further aspect, the substrate parameter includes at least one of: a substrate identifier; a substrate shape; a substrate location; a distance from the substrate surface to the spray coating apparatus; an angle of deposition of the coating material relative to the substrate surface; a motion pattern, said motion pattern representing movement of the substrate relative to the coating material applicator; and a deposited coating material thickness.

In another aspect, the controller and the detector are integrated into a single unit, and the single unit can be coating material applicator, such as, for example, a spray coating material applicator.

A further aspect is directed to a coating material applicator that can be, for example, a spray coating applicator, with the coating material applicator including at least one detector, with at least one detector configured to detect at least one of: at least one condition parameter; and/or at least one substrate parameter. The coating material applicator further includes a controller configured to regulate a flow of a coating material from the coating material applicator and a display configured to indicate at least one of: a presence and/or an absence of at least one of: the condition parameter and the substrate parameter. The coating material applicator further includes or is in communication with a controller that is further configured to regulate a release of and/or control of an amount of a coating material from the coating material applicator to a substrate. The release of and/or the control of the amount of the coating material is configured to occur in response to at least one condition parameter and/or at least one substrate parameter, with the substrate having a substrate surface.

In a further aspect, the coating material applicator controller is in communication with at least one memory, with the memory including an expandable collection of at least one of: at least one condition parameter, or at least one substrate parameter.

A further aspect is directed to a method for controlling, altering, delivering and/or terminating the delivery or release of a coating material to a substrate from a coating material applicator, said substrate having a substrate surface, the method comprising: detecting at least one condition parameter with a condition parameter detector to form a detected condition parameter value, said condition parameter detector in communication with a controller; accessing a condition parameter value range from a condition parameter memory; comparing the condition parameter value range from the condition parameter memory to the detected condition parameter value; sending a condition parameter value signal to the controller; detecting at least one substrate parameter with a substrate parameter detector to form a detected condition parameter value, said substrate parameter detector in communication with the controller; accessing a substrate parameter value range from a substrate parameter memory; comparing the substrate parameter range from the substrate parameter memory to the detected substrate parameter value; and sending a substrate parameter value signal to the controller; and controlling the release (e.g., altering, impeding, terminating, regulating, etc. the release) of a predetermined amount of the coating material from the coating material applicator.

In another aspect, a method is disclosed further including determining a coating material deposition rate, and controlling (e.g., altering, impeding, terminating, regulating, etc.) the deposition rate of the coating material.

In another aspect, a method further includes releasing the predetermined amount of the coating material from the coating material applicator based on at least one detected condition parameter value or at least one substrate parameter value.

In a further aspect, a method further includes releasing the predetermined amount of the coating material from the coating material applicator based on at least one substrate parameter signal sent from the controller to the coating material applicator.

Another aspect further includes terminating the release of the predetermined amount of coating material from the coating material applicator.

In a further aspect, a method includes developing a condition parameter and/or a substrate parameter from learned limits, such as, for example, from machine learning through exposure of present systems and apparatuses to a user's (e.g., an operator's) coating material application preferences, coating material application techniques, etc. (e.g., to personalize a coating material applicator to a user over time).

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is a box diagram illustrating an aspect of the present disclosure;
FIG. 2 is a box diagram illustrating an aspect of the present disclosure;
FIG. 3 is a box diagram illustrating an aspect of the present disclosure;
FIG. 4 is a box diagram illustrating an aspect of the present disclosure;
FIG. 5 is an illustration of an aircraft;
FIG. 6A is a perspective side view of an apparatus, system and method according to an aspect of the present disclosure;
FIG. 6B is a perspective overhead view of an apparatus, system and method according to an aspect of the present disclosure;
FIG. 6C is a perspective overhead view of an apparatus, system and method according to an aspect of the present disclosure;
FIG. 6D is a perspective overhead view of an apparatus, system and method according to an aspect of the present disclosure;
FIG. 7A is a perspective side view of an apparatus, system, and method according to an aspect of the present disclosure;
FIG. 7B is a perspective overhead view of an apparatus, system, and method according to an aspect of the present disclosure;
FIG. 8 is a flowchart outlining a method according to an aspect of the present disclosure;
FIG. 9 is a flowchart outlining a method according to an aspect of the present disclosure; and
FIG. 10 is a flowchart outlining a method according to an aspect of the present disclosure.

### DETAILED DESCRIPTION

The present disclosure contemplates aspects directed to apparatuses, systems, and methods for controlling the application of coating materials and altering rates and/or degrees of coating material deposition (including, for example, suspending, terminating, or inhibiting or impeding the release of coating material) delivered from a coating material applicator to substrate surfaces after and/or in response to detecting and/or confirming certain conditions and/or parameters. The present apparatuses, systems, and methods disclosed herein detect, confirm and/or warn that various environmental "condition parameters" and/or various "substrate parameters" have or have not been met prior to the release of coating material from a coating material applicator.

According to further aspects, the present apparatuses, systems, and methods disclosed herein detect, confirm and/or warn that various environmental condition parameters and/or various substrate parameters are or are not maintained within an acceptable degree or "state" (e.g., a predetermined value or predetermined range of values) before continuing the release of coating material from a coating material applicator during an initiated coating material deposition process and/or protocol. In such instances, if the various environmental condition parameters and/or various substrate parameters have changed, or are no longer present to a predetermined degree (e.g., a predetermined value) and/or are no longer within a predetermined range of acceptable values, the presently disclosed apparatuses, systems, and methods alter (e.g., increase or decrease) the deposition rate of a coating material being released from a coating material applicator in response to the detected changed parameter(s) and to potentially compensate for the change in detected parameter(s).

In further instances, if the various environmental condition parameters and/or various substrate parameters change or deviate from a predetermined value, or change or deviate outside of an acceptable predetermined range of values (e.g., during a coating material deposition process or "run"), the release of the coating material from a coating material applicator can be automatically terminated. In a manual mode where the disclosed systems and/or apparatuses are being operated manually by a user, the systems/apparatuses will warn the user of the deviation before terminating the release of coating material from the coating material applicator, or instruct the user to shut the applicator down.

According to an aspect of the present disclosure, a system includes at least one detector or sensor that is able to detect or sense at least one condition parameter or condition characteristic. For the purpose of this disclosure, the terms "detector" and "sensor" are equivalent terms used interchangeably, and the detectors can deliver multiple detector beams, or multiple detectors able to deliver on or more beams can be present "in stereo" such that resulting signals from the detectors can deliver three-dimensional assessments.

According to further aspects, a non-exhaustive list of condition parameters can include, for example, ambient or environmental factors including, for example, temperature, humidity, etc. Further condition parameters can include factors directed to the release of, or the condition of (e.g. the real-time composition of), a coating material dispensed from a coating applicator and/or factors directed to the delivery and/or the application of a coating material from a coating material applicator onto a substrate surface, etc. In this instance, such condition parameters can include factors that monitor or otherwise take into account characteristics pertaining to controlling the release of coating material from a coating material applicator.

Such factors include, for example, velocity and/or acceleration of a flow of coating material released from a coating material applicator; partial and/or total volume of coating material dispensed from a coating material applicator, partial and/or total volume of coating material remaining in a tank or other supply storage means in communication with a coating material applicator; coating material viscosity, coating thicknesses deposited onto a substrate, angle of spray coating released from a coating material applicator relative to the substrate, etc. For the purpose of this disclosure, the term "release" in the context of "controlling the release of" or "releasing" coating material from a coating applicator connotes operations including the liberation of such coating material from a coating material applicator, as well as including altering, attenuating, impacting, increasing or decreasing a flow of material and also terminating an existing coating material flow, and also inhibiting (e.g., interfering with the initiation of the) release of coating material from a coating material applicator, including preventing an initial release of coating material from the coating material applicator.

In another aspect, a system includes the one or more of the aforementioned detectors or sensors that is able to detect at least one condition parameter, and also includes at least one sensor or detector that is able to detect or sense at least one substrate parameter, equivalently referred to herein as a "substrate characteristic", and used interchangeably. A non-exhaustive list of substrate parameters includes, for example, part identification; part identification code, coating code; surface contour; part dimension, etc. For the purpose of this disclosure, the term "part" is equivalent to the term "substrate" and used interchangeably. Further, the term "part surface" is equivalent to the term "substrate surface" and used interchangeably herein.

According to another aspect, a coating material applicator includes, but is not limited to a spray coating material applicator, for example, a "spray gun" or "spray applicator", that includes a controller for regulating various features of the operation of the coating material applicator, and one or more detectors, with the one or more detectors detecting at least one condition parameters and/or at least one substrate parameter. The coating material applicator can further include a wand, strip arm, etc. Contemplated coating material applicators can further include one or more nozzles for dispersing a coating material.

Contemplated coating materials include coating materials in solid (e.g. solid particulate or powder), liquid, and/or gaseous form that are able to flow. According to further aspects, the coating material is a spray coating material. A spray coating material is a coating material that, in the presence of an applied pressure or force, can form a particulate stream of coating material such that flow of coating material is in a spray form, including an electrostatic spray gun.

According to further aspects, the coating material applicator cannot be engaged to an operating mode (e.g. turned "on", or initiated to an "ON MODE", etc.), until the controller receives signals such as, for example, from a storage, memory, library, etc. For the purpose of this disclosure, the terms "storage", "memory", "accessible memory", "retrievable memory", "memory/library" and "library", are equivalent terms used interchangeably. When one or more condition parameters and/or one or more substrate parameters are detected, information regarding the various condition parameter(s) and/or substrate parameter(s) is retrieved from the memory housing a collection of condition parameters and/or a collection of substrate parameters. The detected condition parameter and or substrate parameter detected or sensed by the detectors or sensors is compared with the retrieved information from the memory, and a signal is sent to, for example, the controller for purposes of initiating operation, releasing, continuing a coating material flow release, altering a coating material flow release (e.g., altering the coating material release rate or altering the coating material deposition rate, etc.), or terminating a coating material flow from the coating material applicator.

For the purpose of this disclosure, the term "controlling the release" encompasses the various terms that describe the impact the controller has on the amount of, and, for example, the flow rate of, a coating material that can emanate from the associated coating material applicator. That is, the term "controlling the release" of coating material includes, for example, initiating operation of the coating material applicator; releasing coating material; allowing, maintaining or continuing a particular and desired flow rate of coating material; altering (e.g. increasing or decreasing, etc.) a particular and desired flow rate of coating material; and terminating a particular and desired flow rate of coating material from the coating material applicator to a target such as, for example, a substrate or part surface.

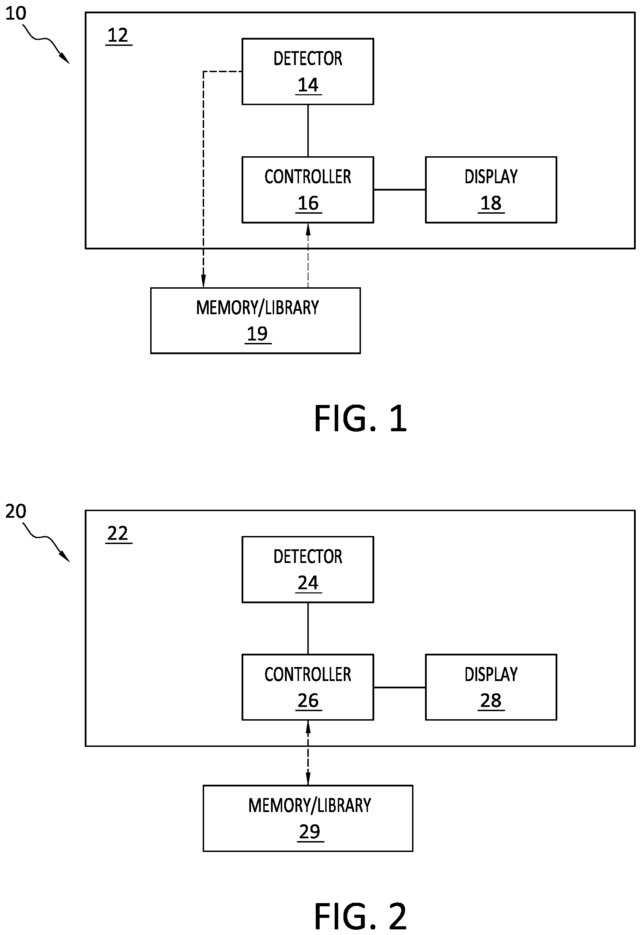

An aspect according to the present disclosure is outlined in FIG. 1. FIG. 1 shows a system 10, including a coating material applicator 12 that can be, for example, a spray coating material applicator, with the system 10 including at least one detector 14. The coating material applicator 12 can be any device able to distribute a fluid flow, preferably under positive pressure from the coating material applicator to a substrate surface. Typical coating material applicators include spray coating "guns", "wands" or "arms" that can be handheld and used manually, or that may be mounted or otherwise associated with a robot assembly for delivering predetermined amounts of a spray coating material from the coating material applicator to a substrate surface in an automated mode (e.g., through the use of a robot, etc.) or via a manual mode. The coating material applicator 12 can be constructed to include components set forth herein and according to aspects of the present disclosure. The coating material applicator 12 can further be retrofitted with the required components to be in accordance with present aspects.

The detector 14 can be any detector or sensor able to perceive (e.g., detect, sense, etc.) a desired parameter (e.g. a desired characteristic, etc.). According to present aspects, the detector 14 recognizes at least one condition parameter and/or at least one substrate parameter. In further aspects, more than one detector is present in system 10, and is associated with coating material applicator 12. With respect to condition parameters, detector 14 detects and records values at least for ambient conditions of the surroundings immediately adjacent to, or in the proximity of the coating material applicator 12. Such condition parameters include, for example, ambient humidity, ambient temperature, etc.

Further condition parameters include, for example, positioning of the coating material applicator 12, including the positioning of or orienting the coating material applicator 12 relative to a substrate surface. Detector 14 can include or be in communication with, for example, global or other positioning systems, etc. to positively determine the specific and/or the defined location of the coating material applicator 12. Detector 14 can further incorporate, or be in communication with, components able to determine the location or position of the coating material applicator 12 relative to another object such as, for example, a substrate surface. For example, detector 14 can incorporate or be in communication with components able to emits beams of energy (e.g., lasers, IR emitters, sonar, etc.), for the purpose of determining specific or approximate distances, including, for example, the distance of the coating material applicator (and/or a feature on the coating material application such as, for example, a coating applicator head, or nozzle, etc.) from a substrate surface, etc.

Detector 14 further incorporates a gyroscopic or other means for determining the orientation of the coating material applicator itself, and for determining the relative position of the coating material applicator to another object (e.g., a substrate surface, etc.) for the purpose of, determining the angle of a coating material flow relative to an object such as, a substrate surface. That is, to maintain the coating material applicator in a position to emit, release, or otherwise deliver a flow of coating material perpendicular to a substrate surface, the detector 14 includes the components necessary to perceive or otherwise detect an angle (e.g., a coating material delivery angle), and/or an angle deviation (e.g., a coating material delivery deviation angle) from the desired coating material delivery angle (e.g., a desired coating material delivery angle of about 90°) relative to the substrate surface (e.g., approximately or substantially perpendicular to a substrate surface).

As further shown in FIG. 1, detector 14 is in communication with controller 16 and can also be in communication with a memory 19. In an aspect shown in FIG. 1, detector 14 detects a condition parameter and/or a substrate parameter. Detector 14 then requests information from or otherwise accesses information stored in memory 19. Information is sent from memory 19 to controller 16 or to a processor (e.g., a computing device with processing circuity (not shown in FIG. 1) that is in communication with controller 16. According to an aspect of the present disclosure, the condition parameter and or substrate parameter detected by detector 14 is compared to a "standard" value or range, or an acceptable value or range for the particular parameter detected. The "standard" value or range can be pre-programmed into, for example, the controller 16, or a processor (not shown) that is in communication with controller 16, or the standard value or range can be accessed from a memory and accessed by the controller 16 or an associated processor (not shown). In a contemplated aspect, a signal is then sent from the controller 16 to various functions present in the system 10 (e.g., displays, pressure activators, hydraulics, pneumatics, pumps, motors, etc.). FIG. 1 shows a display 18 in communication with controller 16. According to an aspect, the display 18 can be in the form of an indicator that makes evident the presence or absence of a particular condition parameter and/or substrate parameter. The display can be configured to signal and otherwise provide and/or display, alone or in combination, a visual indicator (e.g., LED and/or other light display, etc.), auditory indicator (e.g., audible alarm and/or other sound, etc.), and/or tactile indicator (e.g., vibration, mild electric shock, etc.) indication of the presence and/or absence of a particular condition parameter and/or substrate parameter. While FIG. 1 shows the detector 14 capable of sending a signal to the memory/library 19, and the memory/library then sending information to the controller 16, alternative configurations are contemplated by aspects of the present disclosure.

FIG. 2 shows a further diagram outlining a system 20 according to aspects of the present disclosure, with system 20 including a coating material applicator 22 that can be, for example, a spray coating material applicator, with the system 30 including at least one detector 24. The coating material applicator 22 and detector 24 can comprise the features and functions at least equivalent to or different from those described above relating to coating material applicator 12 and detector 14 (shown in FIG.1). As shown in FIG. 2, a detector 24 is in communication with a controller 26. , such that controller 26 is able to send and receive signals from memory 29. Controller 26 is able to both send and receive signals from memory 29. As shown in FIG. 2, information stored in a memory 29 is accessed by and sent to controller 26, and such controller 26 is in communication with display 28. The memory 29 and the display 28 can comprise the features and functions at least equivalent to or different from those described herein relating to the memory 29 and the display 28 (shown in FIG. 1).

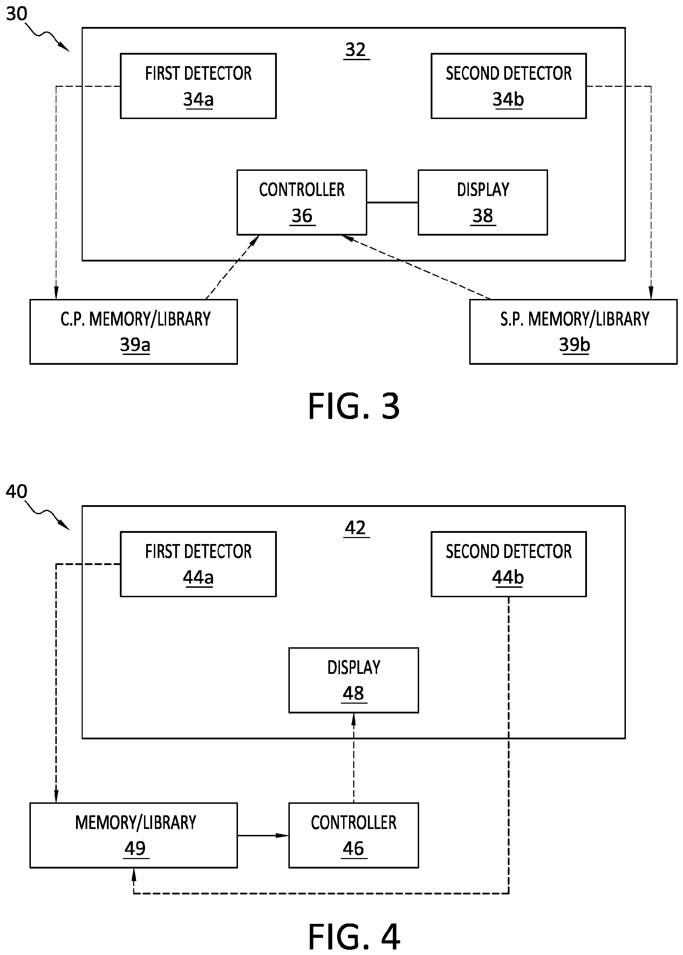

FIG. 3 is a diagram outlining further aspects of the present disclosure. As shown in FIG. 3, system 30 includes a coating material applicator 32 that can be, for example, a spray coating material applicator, with the system 30 including a plurality of detectors represented as first detector 34a and second detector 34b, although system 30 can also include more than the two detectors shown. System 30 further includes two dedicated memories 39a and 39b. More specifically, condition parameter memory 39a (shown in FIG. 3 as "C.P. memory/library") is shown in communication with first detector 34a and controller 36. First detector 34a can be a detector responsible for detecting one or more condition parameters. Substrate parameter memory 39b (shown in FIG. 3 as S.P. memory/library) is shown in communication with second detector 34b and controller 36. Second detector 34b can be a detector responsible for detecting one or more substrate parameters.

As further shown in FIG. 3, a particular condition parameter value can be detected by first detector 34a and first detector 34a sends a signal to access a related condition parameter value or an acceptable condition parameter value range from the condition parameter memory 39a. The detected condition parameter value is compared with the stored condition parameter value and/or condition parameter range accessed from the condition parameter memory 39a and a signal is sent to controller 36. The controller 36 then is activated to initiate the coating material applicator 32, attenuate or alter the flow of coating material flow from the coating material applicator 32, terminate the flow of coating material flow from the coating material applicator 32, or inhibit the initiation or release of a coating material flow from the coating material applicator 32 - the "OFF MODE" (e.g., fail to allow the system 32 to be made operable, to be initiated or otherwise "turned on", etc.), etc. In addition, the controller 36, or another component included in system 32 (but that may or may not be shown in FIG. 3) sends a signal to display 38 that evidences the status of one or more condition parameters. For example, if a detected condition parameter meets or fails to meet an accessed condition parameter value (or falls within or fails to fall within an accessed acceptable condition parameter range) stored in and/or accessed from the condition parameter memory 39a, as shown in FIG. 3, the controller 36 activates the display to confirm to a user that the system 30, for example, can be activated, is being "shut off", and/or is being impacted or otherwise altered due to the receipt of information regarding the detected condition parameter (or condition parameter range), and can affect, for example, the flow rate of coating material being released from the coating material applicator 32.

As further shown in FIG. 3, a particular substrate parameter value can be detected by second detector 34b, and second detector 34b sends a signal to access a related substrate parameter value and/or an acceptable substrate parameter value range from the substrate parameter memory 39b (denoted in FIG. 3 as the "S.P. memory/library"). The detected substrate parameter value is compared with the stored substrate parameter value and/or substrate parameter range accessed from the substrate parameter memory/library range and a signal is sent to controller 36. The controller 36 then is activated to initiate the coating material applicator 32, attenuate the flow of coating material flow from the coating material applicator 32, terminate the flow of coating material flow from the coating material applicator 32, or inhibit the initiation or release of a coating material flow from the coating material applicator 32 (e.g., fail to allow the system 32 to be made operable, to be initiated or otherwise "turned on", etc.). In addition, the controller 36, or another component included in system 32 (that may or may not be shown in FIG. 3) sends a signal to display 38 that evidences the status of one or more substrate parameters. For example, if a detected substrate parameter meets or fails to meet an accessed substrate parameter value, or falls within or fails to fall within an accessed acceptable substrate parameter range stored in and/or accessed from the substrate parameter memory 39b (as shown in FIG. 3), the controller 36 activates the display to confirm to a user that the system 30, for example, can be activated, is being "shut off", and/or is being impacted or otherwise altered by the receipt of information regarding the detected substrate parameter, and will affect, for example, the flow rate of coating material being released from the coating material applicator 32.

FIG. 4 is a diagram illustrating further systems according to aspects of the present disclosure. As shown in FIG. 4, system 40 includes a coating material applicator 42 that can be a spray coating material applicator, with the system 40 including a plurality of detectors shown and represented as first detector 44a and second detector 44b, although system 40 can include more than the two detectors. As shown in FIG. 4, system 40 further includes a shared memory/library 49 in communication with first detector 44a, second detector 44b, and controller 36. First detector 44a can be a detector responsible for detecting one or more condition parameters. As further shown in FIG. 4, a particular condition parameter value can be detected by first detector 44a and first detector 44a sends a signal to access a related condition parameter value or an acceptable condition parameter value range from the memory/library 49. The detected condition parameter value is compared with the stored condition parameter value or condition parameter range accessed from the memory/library 49 and a signal is sent to or otherwise accessed by controller 46.

The controller 46 then is activated, and/or can activate further components not shown in FIG. 4 (including, for example, pneumatics, hydraulics, electronics, etc.), to initiate the coating material applicator 42, attenuate the flow of coating material flow from the coating material applicator 42, terminate the flow of coating material flow from the coating material applicator 42, or inhibit the initiation or release of a coating material flow from the coating material applicator 42 (e.g., fail to allow the system 42 to be made operable, to be initiated or otherwise "turned on", etc.). In addition, the controller 46, or another component included in system 40 (that may or may not be shown in FIG. 4) sends a signal to display 48 that evidences the status of one or more condition parameters. For example, if a detected condition parameter value meets or fails to meet an accessed condition parameter value, or falls (or fails to fall) within an accessed acceptable range stored in and/or accessed from the condition parameter memory/library (as shown in FIG. 4), the controller 46 activates the display to confirm to a user that the system 30, for example, can be activated, is being "shut off", and/or is being impacted or otherwise altered by the receipt of information regarding the detected substrate parameter to affect, for example, the flow rate of coating material being released from the coating material applicator 42.

As further shown in FIG.4, a particular substrate parameter value can be detected by second detector 44b, and second detector 44b sends a signal to access a related substrate parameter value or an acceptable substrate parameter value range from the substrate parameter memory/library 49. As further shown in FIG. 4, a particular substrate parameter or a plurality of substrate parameters can be detected by second detector 44b and second detector 44b sends a signal to access a related substrate parameter value or an acceptable substrate parameter value range from the memory/library 49. The detected condition parameter value is compared with the stored substrate parameter value or substrate parameter range accessed from the memory/library 49 and a signal is sent to controller 46.

The controller 46 then is activated, and can activate further components not shown in FIG. 4 (including, for example, pneumatics, hydraulics, electronics, etc.), to initiate the coating material applicator 42, attenuate the flow of coating material flow from the coating material applicator 42, terminate the flow of coating material flow from the coating material applicator 42, or inhibit the initiation or release of a coating material flow from the coating material applicator 42 (e.g., fail to allow the system 42 to be made operable, to be initiated or otherwise "turned on", etc.). In addition, the controller 46, or another component included in system 42 (that may or may not be shown in FIG. 4) sends a signal to display 48 that evidences the status of one or more condition parameters. For example, if a detected substrate parameter meets or fails to meet an accessed substrate parameter value, or falls or fails to fall within an accessed acceptable range stored in and/or accessed from the substrate parameter memory/library (as shown in FIG. 4), the controller 46 activates the display to confirm to a user that the system 40, for example, can be activated, is being "shut off", and/or is being impacted or otherwise altered by the receipt of information regarding the detected substrate parameter to affect, for example, the flow rate of coating material being released from the coating material applicator 42.

FIGs. 1, 2, and 4 show one memory/library being accessed and/or relaying information to a controller. FIG. 3 shows two memory/libraries being accessed and/or relaying information separately to the controller. However, according to present aspects, any number of memories that are in communication with system components, and that can deliver signals to one or more controllers, or to components that are in communication with the controller, are further contemplated.

According to further aspects, in the systems illustrated by FIGs. 1, 2, 3, and 4, the enumerated components may be integrated into or incorporated into one or more physical units that undertake multiple functions. That is, a single unit or component, or multiple units or components may conduct the detecting, controlling, display and memory functions, and such functions need not be conducted by a series of separate components. In addition, according to further aspects, in each of the systems illustrated by FIGs. 1, 2, 3, and 4, a plurality of each of the enumerated components can be present.

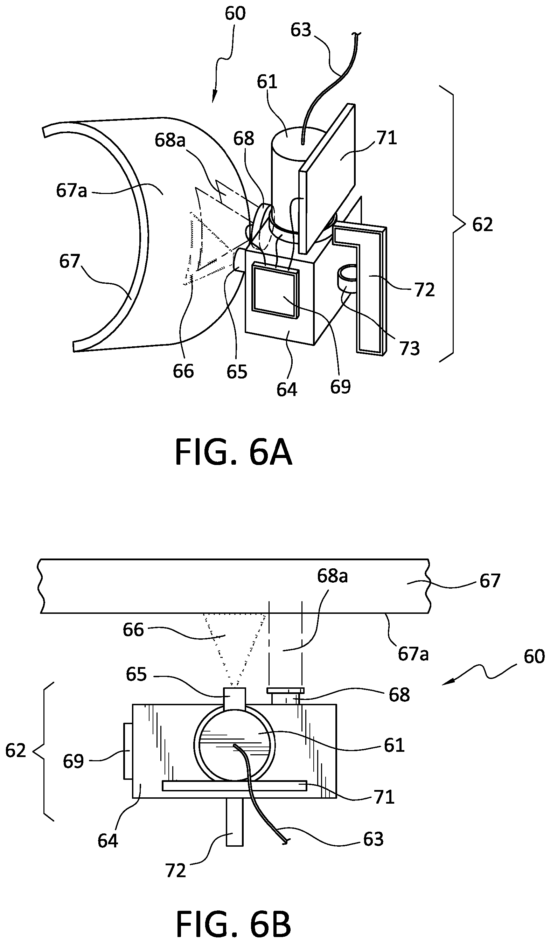

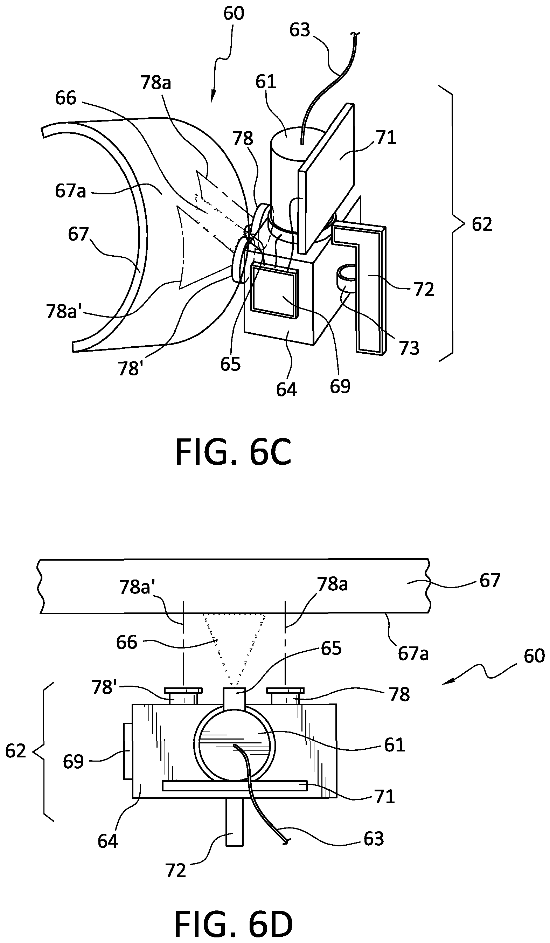

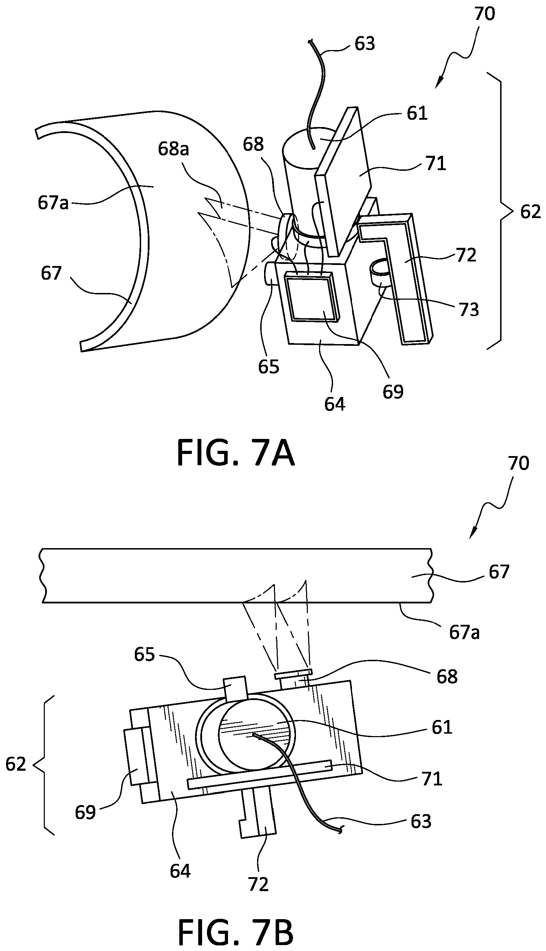

Though not shown in FIGs 1, 2, 3, and 4, the illustrated systems include components used to dispense the coating material and are shown, without limitation, in representative illustrations presented herein in FIGs 6A, 6B, 6C, 6D, 7A, and 7B as coating material applicators that are spray applicators, although other coating material applicators can be substituted and are also contemplated.

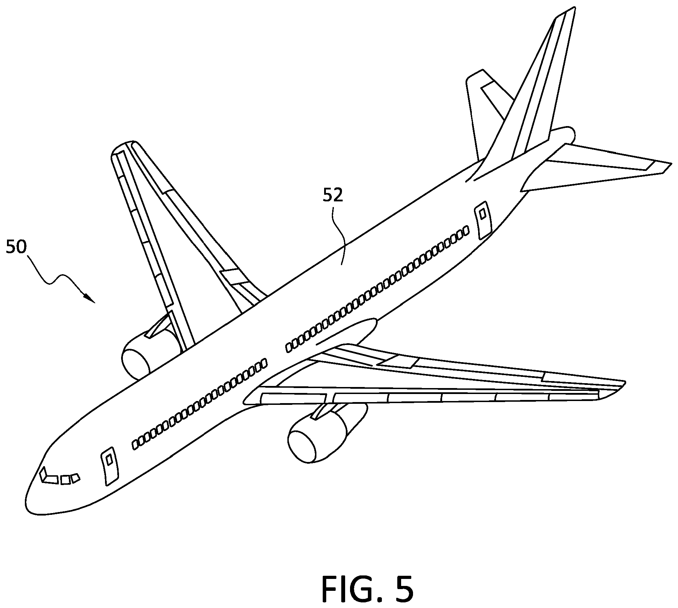

FIG. 5 is a drawing of one particular object, an aircraft 50, having substrate surfaces that can be coated according to aspects of the methods, systems, and apparatuses presented herein. Aircraft 50, as shown includes fuselage 52 having such a substrate surface. While an aircraft has been shown in FIG. 5, the systems, apparatuses, and methods disclosed herein can be used to coat a substrate surface of any desired object including, without limitation, buildings, bridges, aircraft, rotorcraft, spacecraft, satellites, terrestrial vehicles, surface and sub-surface marine vehicles, etc. Further, the systems, apparatuses, and methods disclosed herein can be used to coat planar or contoured surfaces, including complex planar and complex contoured substrate surfaces.

FIGs. 6A and 6B, respectively, are a perspective side view and an overhead or top view of an apparatus, system, and methods according to aspects of the present disclosure. FIGS. 6C and 6D, respectively, are a perspective side view and an overhead or top view of an further apparatus, system, and methods according to aspects of the present disclosure. The difference between the aspect shown in FIGs. 6A and 6B as compared to that shown in FIGs. 6C and6D is the number of and position of the detectors. In FIGs. 6A and 6B one detector 68 is shown emitting two detector beams 68a. FIGs 6C and 6D show two detectors 78 and 78' with each detector positioned astride of nozzle 65 and with each detector 78, 78'emitting one detector beam 78a, 78a', respectively.

As shown in FIGs . 6A, 6B, 6C, and 6D, system 60 includes a coating material applicator 62. Coating material applicator 62 further includes a coating reservoir 61 in communication with air line 63. Coating material reservoir 61 is dimensioned to contain either a predetermined amount of a coating material, or is otherwise in communication with a supply of a coating material (not shown). The coating material can be, for example, paint, primer, top coat, resin material, etc. Air line 63 is designed to provide and deliver on demand a pressure to assist in the delivery of coating material from the coating material reservoir 61. The air line 63 is further in communication with a pump or other device (not shown) that is able to generate a pressure on a fluid for the purpose of assisting in the delivery of a pressurized flow of coating material from the coating material applicator 62. In an alternate aspect (not shown), air line 63 is in communication with a source of pressurized fluid (e.g., air or other gas that can be an inert gas, etc.). Such an alternate configuration can obviate the need for a pump.

As further shown in FIGs. 6A, 6B, 6C, and 6D coating material applicator 62 that is shown as a spray coating material applicator, further comprises an applicator body 64 that is shown as being in communication with coating material reservoir 61. Coating material applicator 62 further includes a nozzle 65 for dispensing a coating material flow 66 from the coating material applicator 62 to, for example, a substrate surface 67a of a substrate 67. Coating material applicator 62 further includes a detector 68 for detecting a substrate parameter. As shown in FIGs. 6A and 6B, two detecting beams 68a emanate from detector 68 for the purpose of producing a signal for three-dimensional use in "stereo", with the beams relaying information about the substrate parameter back to detector 68. Detector 68 can include, without limitation, a camera, stereo cameras, etc. that may be visual-based, infrared-based, etc., and more than one detector may be incorporated into the coating material applicator 62. While detector 68 in FIGs 6A and 6B show multiple beams emanating from one detector 68 (e.g., a camera), multiple detectors that emanate one or more beams can be used, with detectors positioned in any orientation, as desired, and can be positioned astride the nozzle 65. That is, for example, as shown in FIGs. 6C and 6D, two detectors are shown (78 and 78'), with one each on either side of the nozzle 65.

As shown in FIGs. 6A, 6B, 6C, and 6D, controller 69 is shown as being integrated into coating material applicator 62. The controller 69 is capable of sending and receiving signals and can include, without limitation, embedded sensors, Wi-Fi, Blue Tooth, GPS, etc. When detecting beam 68a, 78a or 78a' detects substrate parameter values that meet a parameter value accessed from a memory (not shown) of accepted surface parameter values, or fall within an acceptable surface parameter range, a processor (not shown) that is incorporated within the controller 69 or is otherwise in communication with the controller 69 enables the controller to operate the coating material applicator 62 to an "ON" mode. The "ON" mode is indicated on the display 71 that can be, without limitation, an LCD display having warning indicators, distance feedback, visual/infrared information, audible alarm, tactile alarm (e.g., a pulse or vibratory "buzz", etc.) to provide feedback and real-time monitoring to alert a human user or a robot. In another aspect, the display can be a smart phone or tablet having warning indicators, distance feedback, visual/infrared information, audible alarm, tactile alarm (e.g., a pulse or vibratory "buzz", etc.) to provide feedback and real-time monitoring to alert a human user or a robot. FIGs. 6A, 6B, 6C, and 6D further show the coating material applicator 62 including an incorporated handle 72 and a trigger 73 that can be engaged by an operator to, for example, override a system shutoff in manual operation, if desired.

FIG. 6B is an overhead view of the system 60 shown in FIG. 6A. As shown in FIG. 6B, the coating material applicator 62 is positioned substantially parallel to the substrate surface. The detector beam 68a is represented by the dotted lines indicating that the detector beam is being emitted by the detector 68, and received by the detector 68 in a directional orientation that is substantially perpendicular relative to the substrate surface 67a. According to a present aspect, when the angle of the detecting beam 68a remains in a substantially perpendicular orientation relative to the substrate surface 67a, the coating material applicator will discharge a predetermined material flow from the applicator to the substrate surface. The system 60 shown in FIGs. 6A and 6B represent an "ON MODE", where substrate parameters are detected as being optimal for a delivery of a coating material flow from the coating material applicator to the substrate surface.

FIG. 6D is an overhead view of the system 60 shown in FIG. 6C. As shown in FIG. 6D, the coating material applicator 62 is positioned substantially parallel to the substrate surface. The detector beams 78a, 78a' are represented by the dotted lines indicating that the detector beam is being emitted by the detectors 78, 78' respectively, and received by the detectors 78, 78' in a directional orientation that is substantially perpendicular relative to the substrate surface 67a. According to a present aspect, when the angle of the detecting beams 78a, 78a' remains in a substantially perpendicular orientation relative to the substrate surface 67a, the coating material applicator will discharge a predetermined material flow from the applicator to the substrate surface. The system 60 shown in FIGs. 6A, 6B, 6C, and 6D represent an "ON MODE", where substrate parameters are detected as being optimal for a delivery of a coating material flow from the coating material applicator to the substrate surface.

FIGs. 7A and 7B are perspective views of an apparatus, system, and method according to an aspect of the present disclosure, and show system 70 that is similar to system 60 (shown in FIGs. 6A, 6B, 6C, and 6D) with a significant difference. FIGs. 7A and 7B illustrate the detection of a surface parameter that is not optimal for a delivery of a coating material flow from the coating material applicator to the substrate surface, and illustrate an "OFF MODE", where the delivery of a coating material flow from the coating material applicator to the substrate surface has been terminated, or fails to be initiated.

As shown in FIGs. 7A and 7B, the coating material applicator 62 has become positioned such that it is no longer positioned substantially parallel to substrate 67 and substrate surface 67a (e.g., as compared to the orientation of the coating material applicator 62 relative to the substrate as shown in FIGs. 6A, 6B, 6C, and 6D). As a result, as shown in FIGs. 7A and 7B, the detector beam 68a emanating from detector 68 no longer impacts substrate surface 67a in an orientation that is substantially perpendicular to the substrate surface 67a. The detector 68 observes this shift in position of the coating material applicator 62 by evaluating information relayed to the detector 68 from the detector beams 68a. To safeguard against an unwanted, uncontrolled, uneven, etc. release of coating material from the coating material applicator 62, and to safeguard against a deposition of coating material onto the substrate surface 67a that is potentially unwanted, uncontrolled, uneven, etc., the detector 68 sends a signal to the controller 69. Controller 69 then senses the imbalance in the system caused by a the coating material applicator 62 being out of a desired coating position (e.g., a position that is substantially parallel to the substrate 67 and the substrate surface 67a. The controller 69 then shuts down or predictably alters the coating material flow emanating from the coating material applicator to account for the shifting position of the coating material applicator 62.

The degree that the coating material flow is altered by the controller includes curtailing the coating material flow (e.g., by volume, pressure, velocity, coating rate etc.), increasing the coating material flow (e.g., by volume pressure, velocity, coating rate, etc.), as well as terminating operation and stopping or terminating release of coating material flow. In the case where the coating operation has not yet been initiated, if the coating material applicator is detected as being "out of position" relative to an ideal material deposition position, (e.g., substantially parallel to a substrate, etc.) and/or if the coating material flow is detected as being "out of position" relative to an ideal coating material deposition flow (e.g., deposition flow not substantially perpendicular to a substrate surface, etc.), coating material flow from the coating material applicator will be altered to a degree up to and including terminating or otherwise preventing coating material flow from the coating material applicator.

In addition to detecting substrate parameters, and according to a further aspect, the coating material applicator can detect condition parameters as stated above including, without limitation, ambient or environmental factors including, for example, temperature, humidity, etc. Further condition parameters can include factors directed to the release of, or the condition of, a coating material dispensed from or to be dispensed from a coating applicator and/or factors directed to the delivery and/or the application of a coating material from a coating material applicator onto a substrate surface, etc. In this instance, such condition parameters can include factors that monitor or otherwise take into account characteristics pertaining to controlling the release of coating material from a coating material applicator. Such factors include, for example, velocity and/or acceleration of a flow of coating material released from a coating material applicator; partial and/or total volume of coating material dispensed from a coating material applicator, partial and/or total volume of coating material remaining in a tank or other supply storage means in communication with a coating material applicator; coating thicknesses deposited onto a substrate, angle of spray coating released from a coating material applicator relative to the substrate, etc. ambient temperature, humidity; condition of the coating material including confirming that the coating material comprises and maintains the proper concentration of ingredients (to avoid releasing a coating material where ingredients have, for example, settled out of a suspension, etc.), etc. In further aspects, the coating material applicator can detect both condition parameters and condition parameters.

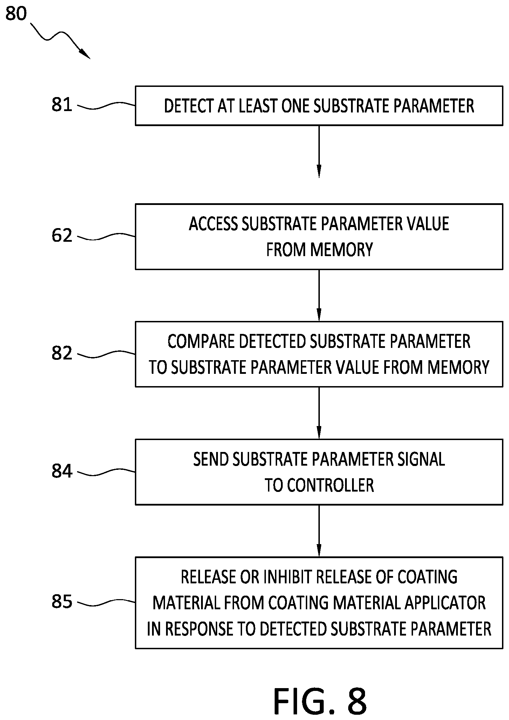

FIG. 8 is a flowchart outlining a method according to an aspect of the present disclosure. As shown in FIG. 8, method 80 is directed to a method for delivering a coating material from a coating material applicator to a substrate having a substrate surface. The outlined method 80 includes detecting 81 at least one substrate parameter with a substrate parameter detector to form a detected substrate parameter value, said substrate parameter detector in communication with a controller; accessing 82 a substrate parameter value and/or range from a substrate parameter memory; comparing 83 the detected substrate parameter to the substrate parameter value and/or substrate parameter value range accessed from the substrate parameter memory; sending 84 a substrate parameter value signal to the controller; and controlling 85 the release of a predetermined amount of coating material from the coating material applicator by releasing, altering the release of, or inhibiting the release of coating material from the coating material applicator in response to the detected substrate parameter.

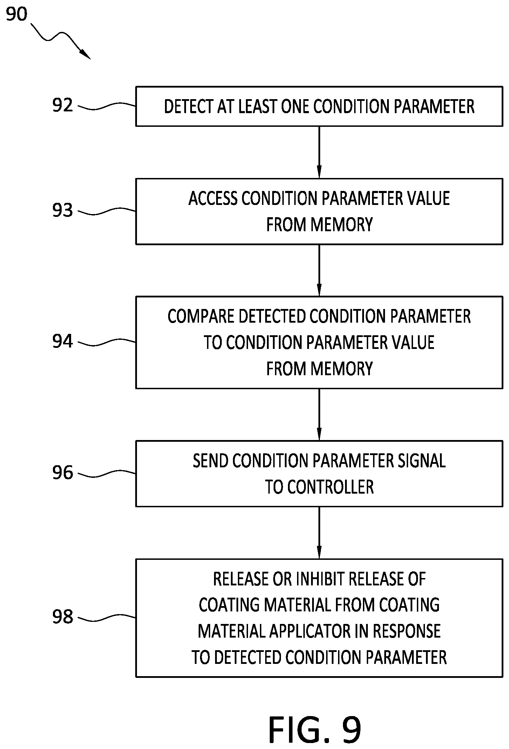

FIG. 9 is a flowchart outlining a method according to an aspect of the present disclosure. As shown in FIG. 9, method 90 is directed to a method for delivering a coating to a substrate from a coating material applicator, with the substrate having a substrate surface. The outlined method 90 includes detecting 92 at least one condition parameter with a condition parameter detector to form a detected condition parameter value, said condition parameter detector in communication with a controller; accessing 93 a condition parameter value and/or condition parameter range from a condition parameter memory; comparing 94 the detected condition parameter to the condition parameter value and/or condition parameter value range accessed from the condition parameter memory; sending 96 a condition parameter value signal to the controller; and controlling 98 the release of a predetermined amount of coating material from the coating material applicator by releasing, altering the release of, or inhibiting the release of coating material from the coating material applicator in response to the detected condition parameter.

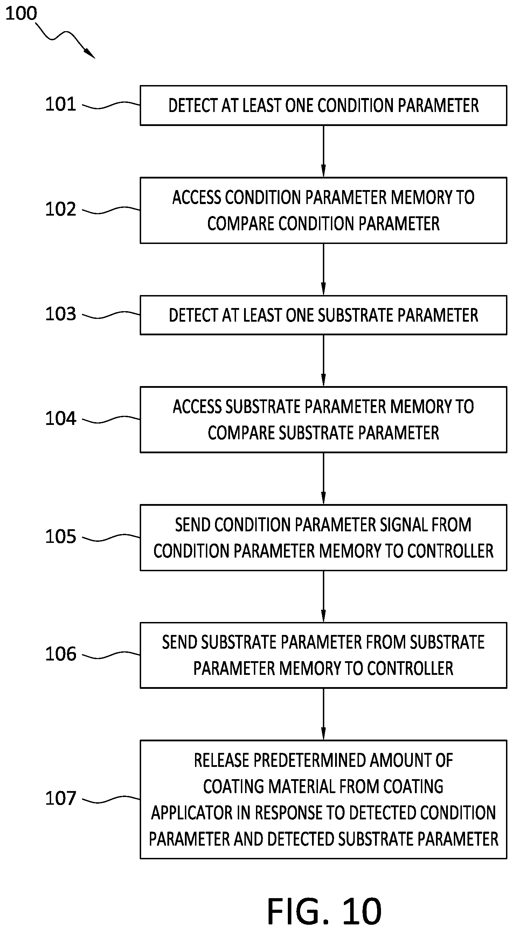

FIG. 10 is a flowchart outlining a method according to aspects of the present disclosure. As shown in FIG. 10, method 100 is directed to a method for delivering a coating material to a substrate from a coating material applicator, with the substrate having a substrate surface. The outlined method 100 includes detecting 101 at least one condition parameter with a condition parameter detector to form a detected condition parameter value, said condition parameter detector in communication with a controller; accessing 102 a condition parameter value and/or range from a condition parameter memory to compare to the detected condition parameter to the accessed condition parameter value and/or range; detecting 103 at least one substrate parameter with a substrate parameter detector to form a detected condition parameter value, said substrate parameter detector in communication with the controller; accessing 104 a substrate parameter value and/or range from a substrate parameter memory to compare the accessed substrate parameter value and/or range from the substrate parameter memory to the detected substrate parameter; sending 105 a substrate parameter value signal to the controller; sending 106 a substrate parameter value signal to the controller; and controlling 107 the release of a predetermined amount of coating material from the coating material applicator by releasing, altering the release of, or inhibiting the release of coating material from the coating material applicator in response to the detected substrate parameter and/or the detected condition parameter.

Non-limiting exemplary illustrative protocols for initiating and inhibiting release of coating material from coating material applicators, according to present aspects, are provided below for illustration only.

### EXAMPLE 1

A coating material applicator is powered up and is positioned at a desired distance from and substantially parallel to a substrate having a substrate surface facing the applicator. The operator identifies the substrate (e.g. the part to be coated) by either scanning a part code on the substrate with an integrated scanner or a remote scanner in communication with the coating material applicator. If no part code exists, the operator captures an image of the substrate with the integrated detector via stereo cameras or a remote camera unit in communication with the coating material applicator. The integrated controller (or the detector in communication with the controller) associates an internal memory (or retrieves information from a Cloud storage-based memory). In real time, the detector further assesses condition parameters and/or further substrate parameters including: temperature (ambient and/or substrate temperature), humidity, angle of applicator relative to substrate, distance of applicator and/or applicator spray head from substrate surface, applicator air pressure, paint viscosity, etc. Further condition parameters detected according to present aspects further include detecting coating material "identity", defined as coating material composition such that if the coating material is a non-homogeneous mixture in which components can, for example, over time "settle" or otherwise become diluted or fall out of a desired state of suspension over a pot life of the coating material, such change in coating material composition is also detected and reported to the system and is otherwise taken into account relative to the need to alter or terminate coating material flow from the coating material applicator. Such variance in coating material composition may be detected from the coating material in real time, or can be determined by detectors by monitoring the impact of the coating material deposited onto a substrate (e.g., in terms of monitoring and detecting changes in coating opacity, translucence, color, reflectivity, finish, etc.).

During operation and release of coating material, for example, in real time, the applicator further assesses acceleration and/or velocity of coating material flow, flow rates, etc. The part is verified and the substrate surface is confirmed as clean and ready for coating, If the condition parameters and substrate parameters are confirmed by the applicator, the applicator is enable to a ready or "ON MODE" indicated at the applicator indicator, and coating material release from the coating material applicator is initiated. The coating material release can be continuously monitored, in real time, by the applicator, at least via stereo cameras providing real time information to the controller, including spray stream angles, applicator angle, distance, velocity, acceleration, pressure, to make certain that condition parameters and substrate parameters are maintained within acceptable and memory-accessed values, ranges, limits, etc.

In a manual mode (where the operator may be a human operator), information during the coating process is conveyed to the operator via at least one of visual, audible (warning alarm, etc.) and/or tactile means (vibration, etc.). One visual means is the production of text information, messages, lights, light patterns, changing light colors, etc., onto the applicator display.

In an auto mode (where the operator is a robot or other automated means), the coating material applicator includes Smart adaptive functions such that, during coating material release from the applicator, the controller variably adjusts valves etc., to control air and coating material flow to insure coating material uniformity on the substrate surface based on dynamic conditions received from sensors and/or detectors, etc., to remain within memory or Cloud-based accessed tolerance values or ranges, etc. When a coating thickness is sensed and achieved, a photo of the completed job showing the coated substrate surface can be taken with attached analytics such as coating material feed/flow rates, air pressure used, temperature and humidity during operation, angle of material deposition, number of passes, coating thickness, surface texture, and other statistics. Such information at the completion of the coating operation can be sent to a quality control or inspection function to verify successful operation.

### EXAMPLE 2

If coating condition parameter and/or substrate parameters are not confirmed or otherwise present, the coating material applicator will not operate. For example, to load substrate (e.g., part) information, an operator scans part code and the controller associates or accesses an internal or remote memory (e.g., Cloud-based storage, etc.). Such information includes part image, temperature and humidity limits/ranges, angle, distance, air pressure, paint viscosity, flow rates, acceleration and velocity rates, etc. The part is verified via stereo or other cameras incorporated into or in communication with the coating material applicator. If the camera or other sensor determines that the correct part is not present, or that the part is not clean or otherwise not prepared with coating, the coating material release mechanism(s) (e.g., trigger, release valve, etc.) is disabled and the applicator will not release coating material. Similarly, if the sensors and detectors incorporated into the coating material applicator determine that parameter conditions and/or substrate parameters are not "met" (by being within acquired or accessed tolerances, values, ranges, etc.), the coating material release mechanism(s) (e.g., trigger, release valve, etc.) is disabled and the applicator will not release coating material.

### EXAMPLE 3

Further, if condition and substrate parameters are met initially, and the coating material applicator is enabled for coating material release, but conditions change during a coating operation, the release of coating material from the applicator will either be altered or terminated. That is, changing conditions impacting substrate or condition parameters will be recognized by the coating material applicator in real time by one or more integrated cameras, sensors, detectors, etc. (or by one or more cameras, sensors, detectors located remotely from the coating material applicator, but that are in communication with the coating material applicator. Such sensed changes in substrate and/or condition parameters are signaled to the coating material applicator display to alert an operator via visual (e.g., LED indicators on the integrated display; for example, an LCD screen), audible or vibratory alarms. Error codes can be sent to appear on the display and the operator can take real-time corrective action by altering various coating material release delivery factors (e.g., flow rates, angles, distance, pressure, velocity, acceleration, etc.). If a condition change cannot be corrected through alteration of a coating material release factor, the release of coating material from the coating material application will be terminated, as the applicator will be switched to an "OFF MODE" that disabled material release mechanisms in the coating material applicator.

In an automated mode, the perceived parameter changes will be accounted for by altering factors that impact coating material release from the applicator, including, for example, release rate, pressure, distance correction, angle correction, etc. If a condition change cannot be corrected through alteration of a coating material release factor, the release of coating material from the coating material application will be terminated, as the applicator will be switched to an "OFF MODE" that disabled material release mechanisms in the coating material applicator.

While any useful components can be incorporated into the coating material applicators disclosed herein, according to further aspects controllers such a, for example, Raspberry Pi, Arduino, and/or industrial Smart phones, tablets, etc. can be used. If Smart phones are used, custom apps can be created with, for example, image recognition. According to further aspects, detectors including, for example, humidity/temperature (e.g., Arduino DHT11 and humidity sensor), stereo infrared/visual cameras, GPS units, accelerometers, etc., can also be incorporated into the presently disclosed coating material applicators. Similarly, various useful LCD or other displays, for example, can be incorporated into the coating material applicators disclosed herein. Useful incorporated data inputs/outputs include, for example and without limitation, Remote Access Storage, Cloud data, Bar or QR code scanning, etc.

Regarding data collected from "input" stations via sensors or detectors contemplated for use with the present methods, systems, and apparatuses disclosed herein, such "input stations" can include, for example, cameras (visual and IR), distance lasers, GPS, accelerometers, etc, and can perform information data gathering associated with temperature, humidity, positioning, velocity, acceleration, etc.

According to further aspects, further data collected with respect to substrate parameters from "input stations" via sensors or detectors contemplated for use with the present methods, systems, and apparatuses disclosed herein, can include, for example, QR Code reading devices or systems for the purpose of part identification as well as codes associated with paints and other coating materials.

Additional data entry at "input stations" includes the use of and incorporation of keypads or menu button on screens with fields indicating, for example, up/down arrows, accept/reject fields, etc.

The presently contemplated controllers are in communication with or otherwise include built-in memory that relate to predetermined values or ranges deemed acceptable relative to flow rate, distance, spray angle, applicator positioning, temperature, humidity, motion patterns, minimum/maximum coating deposition thicknesses, coating deposition rate, part shape, substrate surface features, etc. Firmware algorithms assist the present methods, systems and apparatuses by facilitating system teach/train modes, shape recognition, limits and ranges and other analytics. The controllers can control an automated system by enabling or disabling the coating material applicator, or otherwise altering the output or release of coating material from the coating material applicators disclosed herein, up to and including termination of coating material flow or and/or release. According to other aspects, further controller functions include controlling analog outputs for the purpose of automatically controlling or adjusting/altering coating material flow rate, air pressure rate, etc.

According to further aspects, system and apparatus incorporated into the present coating material applicators, systems and methods as "output" include, for example, feedback provided digitally to readouts to indicate visual, audible and tactile (e.g. vibratory, etc.) signals, for example as audible warnings and/or warning readings on a display. Regarding visual display, LEDs of varying colors (e.g. green, yellow, red, etc.) with varying attendant meanings can be directed to and appear on LCD Screens.

In addition, and according to further aspects, presently disclosed methods, systems and apparatuses includes developing a condition parameter and/or a substrate parameter from learned limits, such as, for example, from machine learning through exposure of present systems and apparatuses to a user's (e.g., an operator's) coating material application preferences, coating material application techniques, etc. (e.g., to personalize a coating material applicator to a user over time). Such machine learning can include useful computing devices with processing circuitry configured to carry out steps of disclosed methods to allow a the disclosed coating systems and apparatuses to learn and adapt to habits, characteristics, etc., of a user.

## Claims

1. A system (10) (20 (30) (40) for depositing a substantially uniform coating, the system comprising:
a first detector (14) (24) (34a) (44a) and a second detector (14) (34b) (44b) (68) (78) (78'), wherein the first detector is configured to detect at least one condition parameter; and the second detector is configured to detect at least one substrate parameter, wherein said at least one substrate parameter comprises an angle of deposition of a coating material relative to a substrate surface (67a);
a controller (16) (26) (36) (46) (69);
at least one memory (19) (29) (39a) (39b) (49), said memory containing a collection of at least one of: at least one condition parameter, or at least one substrate parameter, said memory being in communication with said controller; and
a coating material applicator (12) (22) (32) (42)being in communication with the controller and being configured to be operated automatically; and
wherein said system is configured to detect that the angle of deposition of the coating material relative to the substrate surface (67a) has changed and is not within a predetermined range of values,
wherein said system is configured to alter the deposition rate of the coating material being released from the coating material applicator (12) (22) (32) (42) in response to the angle of deposition of the coating material relative to the substrate surface (67a) not being within the predetermined range of values
wherein said system is configured to terminate the release of coating material from the coating material applicator (12) (22) (32) (42), if the change of the angle of deposition cannot be corrected through alteration of a coating material release rate.

2. The system of Claim 1, wherein the condition parameter comprises at least one of:
an ambient relative humidity; an ambient temperature; a coating material flow rate; a distance; and a deposited coating material thickness.

3. The system of Claims 1 or 2, wherein the substrate parameter further comprises at least one of: a substrate identifier; a substrate shape; a substrate location; a distance from the substrate surface to the coating material applicator; a motion pattern, said motion pattern representing movement of the substrate relative to the coating material applicator; and a deposited coating material thickness.

4. The system of any of Claims 1 to 3, further comprising:
a display (18) (28) (38) (48) (71) configured to signal at least one of:
a presence of at least one of the condition parameter and the substrate parameter; and
an absence of at least one of the condition parameter and the substrate parameter.

5. The system of Claim 4, wherein the display comprises at least one of: a visual indicator;
an auditory indicator; and a tactile indicator.

6. The system of any preceding Claim, further comprising:
the first detector configured to detect at least one condition parameter, said first detector in communication with a first memory, said first memory containing a collection of at least one condition parameter; and
the second detector configured to detect at least one substrate parameter, said second detector in communication with a second memory, said second memory containing a collection of at least one substrate parameter.

7. The system of any preceding Claim, wherein the coating material applicator and/or the controller is in communication with a robot.

8. A method (80) (90) (100) for delivering a coating material to a substrate from a coating material applicator by the system of claim 1, said substrate having a substrate surface, the method comprising:
detecting (92) (101) at least one condition parameter with a condition parameter detector to form a detected condition parameter value, said condition parameter detector in communication with a controller;
accessing (93) (102) a condition parameter value range from a condition parameter memory;
comparing (94) the condition parameter value range from the condition parameter memory to the detected condition parameter value;
sending (96) (105) a condition parameter value signal to the controller;
detecting (81) at least one substrate parameter with a substrate parameter detector to form a detected condition parameter value, said substrate parameter detector in communication with the controller;
accessing (82) (104) a substrate parameter value range from a substrate parameter memory;
comparing (83) the substrate parameter range from the substrate parameter memory to the detected substrate parameter value; and
sending (84) (106) a substrate parameter value signal to the controller; and
controlling (85) (98) the release of a predetermined amount of coating material from the coating material applicator.

9. The method of Claim 8, further comprising:
determining a coating deposition rate; and
controlling the coating deposition rate of the coating material.

10. The method of Claims 8 or 9, further comprising:
releasing the predetermined amount (107) of the coating material from the coating material applicator based on at least one detected condition parameter value or at least one substrate parameter value.

11. The method of any of Claims 8 to 10, wherein in the step of controlling release of a predetermined amount of a coating material from the coating material applicator further comprising:
releasing the predetermined amount (107) of the coating material from the coating material applicator in response to at least one substrate parameter signal sent from the controller to the coating material applicator.

12. The method of any of Claims 8 to 11, wherein in the step of controlling release of a predetermined amount of the coating material from the coating material applicator further comprising:
terminating release of the predetermined amount of coating material from the coating material applicator.

13. The method of any of Claims 8 to 12, further comprising:
delivering a substantially uniform coating to the substrate surface.

14. The method of any of Claims 8 to 13, wherein, in the step of detecting at least one condition parameter with a first detector, further comprising:
developing condition parameters from learned limits.

15. The method of any of Claims 8 to 14, wherein release of a the predetermined amount of the coating material released from the coating material applicator further comprising:
directing automatically a substantially uniform coating to the substrate surface.

## Patentansprüche

1. System (10) (20) (30) (40) zum Auftragen einer im Wesentlichen gleichmäßigen Beschichtung, wobei das System aufweist:
einen ersten Detektor (14) (24) (34a) (44a) und einen zweiten Detektor (14) (34b) (44b) (68) (78) (78'), wobei der erste Detektor konfiguriert ist, mindestens einen Zustandsparameter zu detektieren; und der zweite Detektor konfiguriert ist, mindestens einen Substratparameter zu detektieren, wobei der mindestens eine Substratparameter einen Auftragungswinkel eines Beschichtungsmaterials relativ zu einer Substratoberfläche (67a) aufweist;
eine Steuerung (16) (26) (36) (46) (69);
mindestens einen Speicher (19) (29) (39a) (39b) (49), wobei der Speicher eine Sammlung von mindestens einem Zustandsparameter und/oder mindestens einem Substratparameter aufweist, wobei der Speicher in Kommunikation mit der Steuerung ist; und
einen Beschichtungsmaterial-Applikator (12) (22) (32) (42), der in Kommunikation mit der Steuerung ist und konfiguriert ist, automatisch betrieben zu werden; und
wobei das System konfiguriert ist, zu detektieren, dass der Auftragungswinkel des Beschichtungsmaterials relativ zu der Substratoberfläche (67a) sich geändert hat und nicht in einem vorgegebenen Wertebereich ist,
wobei das System konfiguriert ist, als Antwort darauf, dass der Auftragungswinkel des Beschichtungsmaterials relativ zu der Substratoberfläche (67a) nicht in dem vorgegebenen Wertebereich ist, die Auftragungsrate des aus dem Beschichtungsmaterial-Applikator (12) (22) (32) (42) freigesetzten Beschichtungsmaterials zu modifizieren,
wobei das System konfiguriert ist, die Freisetzung von Beschichtungsmaterial aus dem Beschichtungsmaterial-Applikator (12) (22) (32) (42) zu beenden, falls die Änderung des Auftragungswinkels durch Modifikation einer Beschichtungsmaterial-Freisetzungsrate nicht korrigiert werden kann.

2. System nach Anspruch 1, wobei der Zustandsparameter mindestens einen der folgenden aufweist: eine relative Umgebungsfeuchtigkeit; eine Umgebungstemperatur; eine Beschichtungsmaterial-Flussrate; eine Distanz; und eine Dicke des aufgetragenen Beschichtungsmaterials.

3. System nach Anspruch 1 oder 2, wobei der Substratparameter ferner mindestens einen der folgenden aufweist: einen Substrat-Identifikator; eine Substratgeometrie; einen Substratort; eine Distanz von der Substratoberfläche zu dem Beschichtungsmaterial-Applikator; ein Bewegungsmuster, wobei das Bewegungsmuster eine Bewegung des Substrats relativ zu dem Beschichtungsmaterial-Applikator repräsentiert; und eine Dicke des aufgetragenen Beschichtungsmaterials.

4. System nach einem der Ansprüche 1 bis 3, ferner aufweisend:
eine Anzeigeeinrichtung (18) (28) (38) (48) (71), die konfiguriert ist,
ein Vorhandensein eines Zustandsparameters und/oder eines Substratparameters; und/oder
eine Abwesenheit eines Zustandsparameters und/oder eines Substratparameters zu signalisieren.

5. System nach Anspruch 4, wobei die Anzeigeeinrichtung einen visuellen Indikator; und/oder einen akustischen Indikator; und/oder einen taktilen Indikator aufweist.

6. System nach einem der vorstehenden Ansprüche, wobei ferner
der erste Detektor konfiguriert ist, mindestens einen Zustandsparameter zu detektieren, wobei der erste Detektor in Kommunikation mit einem ersten Speicher ist, der erste Speicher eine Sammlung von mindestens einem Zustandsparameter aufweist; und
der zweite Detektor konfiguriert ist, mindestens einen Substratparameter zu detektieren, wobei der zweite Detektor in Kommunikation mit einem zweiten Speicher ist, der zweite Speicher eine Sammlung von mindestens einem Substratparameter aufweist.

7. System nach einem der vorstehenden Ansprüche, wobei der Beschichtungsmaterial-Applikator und/oder die Steuerung in Kommunikation mit einem Roboter ist.

8. Verfahren (80) (90) (100) zur Abgabe eines Beschichtungsmaterials aus einem Beschichtungsmaterial-Applikator auf ein Substrat mithilfe des Systems nach Anspruch 1, wobei das Substrat eine Substratoberfläche hat, wobei das Verfahren aufweist:
Detektieren (92) (101) mindestens eines Zustandsparameters mithilfe eines Zustandsparameter-Detektors, um einen detektierten Zustandsparameterwert zu erzeugen, wobei der Zustandsparameter-Detektor in Kommunikation mit einer Steuerung ist;
Abrufen (93) (102) eines Zustandsparameter-Wertebereichs aus einem Zustandsparameter-Speicher;
Vergleichen (94) des Zustandsparameter-Wertebereichs aus dem Zustandsparameter-Speicher mit dem detektierten Zustandsparameterwert;
Senden (96) (105) eines Zustandsparameterwert-Signals zu der Steuerung;
Detektieren (81) mindestens eines Substratparameters mithilfe eines Substratparameter-Detektors, um einen detektierten Zustandsparameterwert zu erzeugen, wobei der Substratparameter-Detektor in Kommunikation mit der Steuerung ist;
Abrufen (82) (104) eines Substratparameter-Wertebereichs aus einem Substratparameter-Speicher;
Vergleichen (83) des Substratparameter-Wertebereichs aus dem Substratparameter-Speicher mit dem detektierten Substratparameterwert; und
Senden (84) (106) eines Substratparameterwert-Signals zu der Steuerung; und
Steuern (85) (98) der Freisetzung einer vorgegebenen Menge Beschichtungsmaterial aus dem Beschichtungsmaterial-Applikator.

9. Verfahren nach Anspruch 8, ferner aufweisend:
Bestimmen einer Beschichtungsauftragungsrate; und
Steuern der Beschichtungsauftragungsrate des Beschichtungsmaterials.

10. Verfahren nach Anspruch 8 oder 9, ferner aufweisend:
Freisetzen der vorgegebenen Menge (107) Beschichtungsmaterial aus dem Beschichtungsmaterial-Applikator auf Basis mindestens eines detektierten Zustandsparameterwerts oder mindestens eines Substratparameterwerts.

11. Verfahren nach einem der Ansprüche 8 bis 10, wobei der Schritt Steuern der Freisetzung einer vorgegebenen Menge Beschichtungsmaterial aus dem Beschichtungsmaterial-Applikator ferner aufweist:
Freisetzen der vorgegebenen Menge (107) Beschichtungsmaterial aus dem Beschichtungsmaterial-Applikator als Antwort auf mindestens ein aus der Steuerung zu dem Beschichtungsmaterial-Applikator gesendetes Substratparameter-Signal.

12. Verfahren nach einem der Ansprüche 8 bis 11, wobei der Schritt Steuern der Freisetzung einer vorgegebenen Menge Beschichtungsmaterial aus dem Beschichtungsmaterial-Applikator ferner aufweist:
Beenden einer Freisetzung der vorgegebenen Menge Beschichtungsmaterial aus dem Beschichtungsmaterial-Applikator.

13. Verfahren nach einem der Ansprüche 8 bis 12, ferner aufweisend:
Abgeben einer im Wesentlichen gleichmäßigen Beschichtung auf das Substrat.

14. Verfahren nach einem der Ansprüche 8 bis 13, wobei der Schritt Detektieren mindestens eines Zustandsparameters mithilfe eines ersten Detektors ferner aufweist:
Entwickeln von Zustandsparametern aus gelernten Grenzen.

15. Verfahren nach einem der Ansprüche 8 bis 14, wobei Freisetzen der vorgegebenen Menge Beschichtungsmaterial aus dem Beschichtungsmaterial-Applikator ferner aufweist:
automatisches Richten einer im Wesentlichen gleichmäßigen Beschichtung auf das Substrat.

## Revendications

1. Système (10) (20) (30) (40) de dépôt d'un revêtement sensiblement uniforme, le système comprenant :
un premier détecteur (14) (24) (34a) (44a) et un second détecteur (14) (34b) (44b) (68) (78) (78'), dans lequel le premier détecteur est configuré pour détecter au moins un paramètre de condition ; et le second détecteur est configuré pour détecter au moins un paramètre de substrat, dans lequel ledit au moins un paramètre de substrat comprend un angle de dépôt d'un matériau de revêtement par rapport à une surface de substrat (67a) ;
un dispositif de commande (16) (26) (36) (46) (69) ;
au moins une mémoire (19) (29) (39a) (39b) (49), ladite mémoire contenant une collection d'au moins un parmi : au moins un paramètre de condition, ou au moins un paramètre de substrat, ladite mémoire étant en communication avec ledit dispositif de commande ; et
un applicateur de matériau de revêtement (12) (22) (32) (42) en communication avec le dispositif de commande et configuré pour être actionné automatiquement ; et
dans lequel ledit système est configuré pour détecter que l'angle de dépôt du matériau de revêtement par rapport à la surface de substrat (67a) a changé et n'est pas dans une plage de valeurs prédéterminée,
dans lequel ledit système est configuré pour modifier le taux de dépôt du matériau de revêtement qui est libéré de l'applicateur de matériau de revêtement (12) (22) (32) (42) en réponse au fait que l'angle de dépôt du matériau de revêtement par rapport à la surface de substrat (67a) n'est pas dans la plage de valeurs prédéterminée
dans lequel ledit système est configuré pour terminer la libération de matériau de revêtement à partir de l'applicateur de matériau de revêtement (12) (22) (32) (42), si le changement de l'angle de dépôt ne peut pas être corrigé par le biais d'une modification d'un taux de libération de matériau de revêtement.

2. Système selon la revendication 1, dans lequel le paramètre de condition comprend au moins un(e) parmi : une humidité relative ambiante ; une température ambiante ; un débit de matériau de revêtement ; une distance ; et une épaisseur de matériau de revêtement déposé.

3. Système selon les revendications 1 ou 2, dans lequel le paramètre de substrat comprend en outre au moins un(e) parmi : un identifiant de substrat ; une forme de substrat ; un emplacement de substrat ; une distance de la surface de substrat à l'applicateur de matériau de revêtement ; un motif de mouvement, ledit motif de mouvement représentant un mouvement du substrat par rapport à l'applicateur de matériau de revêtement ; et une épaisseur de matériau de revêtement déposé.

4. Système selon l'une quelconque des revendications 1 à 3, comprenant en outre :
une unité d'affichage (18) (28) (38) (48) (71) configurée pour signaler au moins une parmi :
une présence d'au moins un parmi le paramètre de condition et le paramètre de substrat ; et
une absence d'au moins un parmi le paramètre de condition et le paramètre de substrat.

5. Système selon la revendication 4, dans lequel l'unité d'affichage comprend au moins un parmi : un indicateur visuel ; un indicateur auditif ; et un indicateur tactile.

6. Système selon une quelconque revendication précédente, comprenant en outre :
le premier détecteur configuré pour détecter au moins un paramètre de condition, ledit premier détecteur étant en communication avec une première mémoire, ladite première mémoire contenant une collection d'au moins un paramètre de condition ; et
le second détecteur configuré pour détecter au moins un paramètre de substrat, ledit second détecteur étant en communication avec une seconde mémoire, ladite seconde mémoire contenant une collection d'au moins un paramètre de substrat.

7. Système selon une quelconque revendication précédente, dans lequel l'applicateur de matériau de revêtement et/ou le dispositif de commande est/sont en communication avec un robot.

8. Procédé (80) (90) (100) de délivrance d'un matériau de revêtement à un substrat à partir d'un applicateur de matériau de revêtement par le système selon la revendication 1, ledit substrat ayant une surface de substrat, le procédé comprenant :
la détection (92) (101) d'au moins un paramètre de condition avec un détecteur de paramètre de condition pour former une valeur de paramètre de condition détectée, ledit détecteur de paramètre de condition étant en communication avec un dispositif de commande ;
l'accès (93) (102) à une plage de valeurs de paramètres de condition à partir d'une mémoire de paramètres de condition ;
la comparaison (94) de la plage de valeurs de paramètre de condition de la mémoire de paramètres de condition à la valeur de paramètre de condition détectée ;
l'envoi (96) (105) d'un signal de valeur de paramètre de condition au dispositif de commande ;
la détection (81) d'au moins un paramètre de substrat avec un détecteur de paramètre de substrat pour former une valeur de paramètre de condition détectée, ledit détecteur de paramètre de substrat étant en communication avec le dispositif de commande ;
l'accès (82) (104) à une plage de valeurs de paramètre de substrat à partir d'une mémoire de paramètres de substrat ;
la comparaison (83) de la plage de paramètres de substrat de la mémoire de paramètres de substrat à la valeur de paramètre de substrat détectée ; et
l'envoi (84) (106) d'un signal de valeur de paramètre de substrat au dispositif de commande ; et
la commande (85) (98) de la libération d'une quantité prédéterminée de matériau de revêtement à partir de l'applicateur de matériau de revêtement.

9. Procédé selon la revendication 8, comprenant en outre :
la détermination d'un taux de dépôt de revêtement ; et
la commande du taux de dépôt de revêtement du matériau de revêtement.

10. Procédé selon les revendications 8 ou 9, comprenant en outre :
la libération de la quantité prédéterminée (107) du matériau de revêtement de l'applicateur de matériau de revêtement sur la base d'au moins une valeur de paramètre de condition détectée ou d'au moins une valeur de paramètre de substrat.

11. Procédé selon l'une quelconque des revendications 8 à 10, dans lequel l'étape de commande de libération d'une quantité prédéterminée d'un matériau de revêtement à partir de l'applicateur de matériau de revêtement comprend en outre :
la libération de la quantité prédéterminée (107) du matériau de revêtement de l'applicateur de matériau de revêtement en réponse à au moins un signal de paramètre de substrat envoyé du dispositif de commande à l'applicateur de matériau de revêtement.

12. Procédé selon l'une quelconque des revendications 8 à 11, dans lequel l'étape de commande de libération d'une quantité prédéterminée du matériau de revêtement à partir de l'applicateur de matériau de revêtement comprend en outre :
la fin de la libération de la quantité prédéterminée de matériau de revêtement à partir de l'applicateur de matériau de revêtement.

13. Procédé selon l'une quelconque des revendications 8 à 12, comprenant en outre :
la distribution d'un revêtement sensiblement uniforme à la surface de substrat.

14. Procédé selon l'une quelconque des revendications 8 à 13, dans lequel l'étape de détection d'au moins un paramètre de condition avec un premier détecteur comprend en outre :
le développement de paramètres de condition à partir de limites apprises.

15. Procédé selon l'une quelconque des revendications 8 à 14, dans lequel la libération d'une quantité prédéterminée du matériau de revêtement libéré à partir de l'applicateur de matériau de revêtement comprend en outre :
la direction automatique d'un revêtement sensiblement uniforme vers la surface de substrat.
